(19)

Europäisches
Patentamt
European
Patent Office
Office européen
des brevets

(11)   **EP 4 433 791 B1**

(12)   **EUROPEAN PATENT SPECIFICATION**

(45) Date of publication and mention
of the grant of the patent:
**12.03.2025 Bulletin 2025/11**

(21) Application number: **22800779.5**

(22) Date of filing: **14.10.2022**

(51) International Patent Classification (IPC):
***G01M 7/08*** *(2006.01)*   ***G01M 17/007*** *(2006.01)*
***G01N 3/34*** *(2006.01)*

(52) Cooperative Patent Classification (CPC):
**G01M 7/08; G01M 17/0078; G01N 3/34**

(86) International application number:
**PCT/IB2022/059861**

(87) International publication number:
**WO 2023/089405 (25.05.2023 Gazette 2023/21)**

(54) **TEST DEVICE FOR AERONAUTICAL COMPONENT**

TESTVORRICHTUNG FÜR AERONAUTISCHE KOMPONENTE

DISPOSITIF DE TEST POUR COMPOSANT AÉRONAUTIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **19.11.2021 IT 202100029351**

(43) Date of publication of application:
**25.09.2024 Bulletin 2024/39**

(73) Proprietor: **Leonardo S.p.a.
00195 Roma (IT)**

(72) Inventor: **MENAFRO, Felice
10146 TORINO (IT)**

(74) Representative: **Studio Torta S.p.A.
Via Viotti, 9
10121 Torino (IT)**

(56) References cited:
**EP-A1- 0 944 819    US-A1- 2013 298 690**

• **VIJAYA KUMAR RAYAVARAPU: "Experiment-
Based Explicit Dynamics Analysis for Bird Strike
Damage Prediction in Composite Structures",
JOURNAL OF FAILURE ANALYSIS AND
PREVENTION, SPRINGER, BOSTON, vol. 18, no.
4, 19 April 2018 (2018-04-19), pages 877 - 886,
XP036550774, ISSN: 1547-7029, [retrieved on
20180419], DOI: 10.1007/S11668-018-0458-9**

## Description

### Cross-Reference to Related Applications

This Patent Application claims priority from Italian Patent Application No. 102021000029351 filed on November 19, 2021.

### Technical Field

The present invention relates to a test device for an aeronautical component.

### Background of the Invention

In order to obtain the aeronautical certification for aeronautical components, a series of laboratory tests are envisaged, including destructive tests ("Impact/-Crash Test") in which the aeronautical component is subjected to a stress having an energy such as to irreversibly modify the shape and structure of the aeronautical component.

Destructive type tests include, by way of example, the bird strike test in which a pneumatic cannon fires at high speed (up to 450 miles per hour) a bird (usually a chicken or a jelly simulating the bird) with a specified weight (usually 1.5 to 8 pounds) against the aeronautical component from a specified distance. The impact is video-recorded using high-speed video equipment and the real-time speed is measured at each shot. A post-test damage assessment is also performed.

Obviously, the aeronautical component, following a destructive type test, is no longer intact and it is not possible to perform a subsequent "Impact/Crash Test" on the same component.

The main drawback of the "single tests" is that it is not possible to estimate the uncertainty of the results (measurements) obtained from the test itself. The estimation of uncertainty is necessary to certify the theoretical models, i.e. to demonstrate that these models are able to predict the test results with an accuracy that corresponds to the uncertainty of the experimental measurements and thus are also able to predict the actual operating conditions.

Patent US 2013/298690 describes a method and an apparatus for identifying the position of the load on a structure. Various embodiments include calculating a plurality of potential loading sites, evaluating the statistical order of each of such predictions, and selecting the regions of the structure where the load most likely occurred based on the order (or randomness) of the evaluations.

### Summary of the Invention

Aim of the present invention is to provide a test device for aeronautical component that provides uncertainty of the result of a destructive type test thus making it possible to verify whether a theoretical model that simulates such a test has similar uncertainty and therefore the test model is valid. This aim is achieved by the test device of claim 1.

### Brief Description of the Drawings

For a better understanding of the present invention, a preferred embodiment is described below, by way of nonlimiting example, with reference to the accompanying figures wherein:

Figure 1 schematically shows a test device realized according to the present invention; and
Figure 2 shows the control and calculation operations carried out by an electronic unit of the device of Figure 1.

### Preferred Embodiment Example

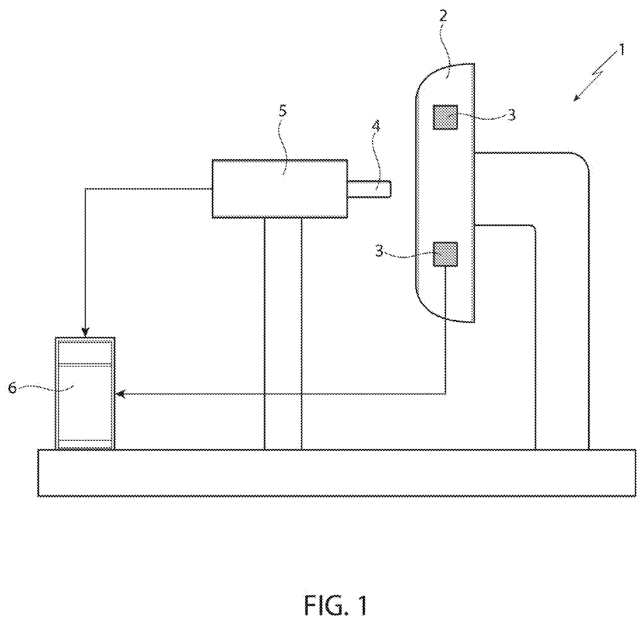

In the test device according to the present invention, an aeronautical component 2 to be subjected to testing is arranged on a test bench 1 (Figure 1) and provided with one or more sensors 3 (of known type) adapted to measure on the aeronautical component 2 a series of physical quantities deriving from the application of forces to the component to be subjected to testing 2.

These forces have values such that they do not irreversibly deform the component 2 to be subjected to testing (low-energy impact). For example, there may be provided a plurality of accelerometers 3 adapted to measure the accelerations present on the component to be subjected to testing 2 following the impact of the end portion 4 of an actuator 5 adapted to generate this force. The actuator 5 is controlled by a computerized control unit 6 that receives the signals coming from the one or more sensors 3 and realizes the method of the present invention. The electronic control unit is provided with an internal memory for storing the acceleration values detected.

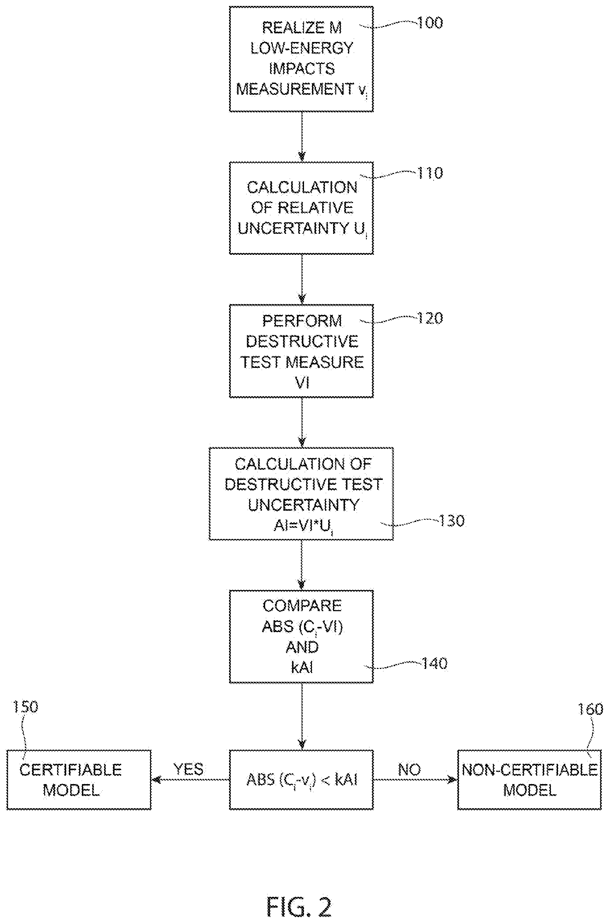

In particular, the following steps are carried out by the computerized control unit 6 (Figure 2):

a) control (block 100) the actuator 5 to perform a series of non-destructive M tests wherein M low-energy impacts are performed on the component to be subjected to testing 2 and for each impact performed, the value of a quantity vi representative of the elastic stress applied to the component during the non-destructive test is measured and stored, in the example shown the quantity corresponds to the acceleration measured by the sensor(s) 3; for the signal produced by each sensor the mean value Vm of the M quantities measured vi and the standard deviation $\sigma$ of the M quantities measured (mean quadratic deviation) is calculated;
b) calculate (block 110) the relative uncertainty Ui of the non-destructive tests as the ratio between the mean of the standard deviations and the mean of the detected quantities - this operation is carried out assuming that the values of "Relative Uncertainty" Ui are independent of the impact energy applied in the execution of the test;

c) control the actuator 5 to perform a destructive test (block 120) on the aeronautical component to be subjected to testing 2 (the test may be performed by the actuator 5 or by other means, for example by the impact of an object on the aeronautical component) and measure and store the value of a quantity VI representative of the elastic stress applied to the component during the destructive test,

d) calculate (block 130) the uncertainty of the destructive test AI by multiplying the value of the quantity VI representative of the elastic stress applied to the component during the destructive test by the value of Relative Uncertainty Ui previously calculated, namely:

$$AI = VI \times Ui;$$

e) compare (block 140) the absolute value of the difference between target values of quantities Ci based on a theoretical model that describes the elastic behaviour of the component to be subjected to testing and the value of the quantity **VI** representative of the elastic stress applied to the component during the destructive test (ABS (Ci -Vi)) with the product of the uncertainty of the destructive test AI calculated in point d) with a scale factor k;

f) if said absolute value is less than said product, the theoretical model developed is considered certifiable (block 150) and namely describing with sufficient accuracy the behaviour of the aeronautical component during the destructive test, namely: (ABS (Ci -Vi)) < k AI → certifiable theoretical model.

g) if said absolute value is not less than said product, the theoretical model developed is considered non-certifiable (block 160) and namely not describing with sufficient accuracy the behaviour of the aeronautical component during the destructive test, namely: (ABS (Ci -Vi)) < k AI → non-certifiable theoretical model.

In other words, the computerized unit performs a series of Low-Energy elastic stresses before the Crash test in order to produce a matrix containing the relative uncertainties at each instant of the low-energy impacts, and finally, after the impact has occurred, the measurement uncertainty is generated starting from the matrix.

**Numbers**

1 test bench
2 aeronautical component
3 sensors
4 end portion
5 actuator
6 computerized control unit

**Claims**

1. A test device for an aeronautical component (2) comprising an electronic control unit (6) and actuator means (5) controlled by the electronic control unit (6) and configured to apply a force to the component being tested (2),

said test device comprising sensors (3) adapted to measure on the aeronautical component (2) physical quantities deriving from the application of forces to the component to be subjected to testing (2);
said test device comprising memory means for storing the measured physical quantities;
said electronic control unit (6) being configured to:

a) control (Block 100) the actuator means (5) to perform a series of non-destructive M tests wherein M low-energy impacts are performed on the component to be subjected to testing (2) and for each impact performed, the value of a quantity vi representative of the elastic stress applied to the aeronautical component (2) during the non-destructive test is measured and stored; the mean value Vm and the standard deviation σ of the measured M quantities vi are calculated;
b) calculate (Block 110) the relative uncertainty Ui as the ratio between the mean of the standard deviations and the mean of the detected quantities;
c) control the actuator (5) to perform a destructive test (block 120) on the aeronautical component to be subjected to testing (2) by measuring and storing the value of a quantity **VI** representative of the elastic stress applied to the component during the destructive test,
d) calculate (block 130) the uncertainty of the destructive test AI by multiplying the value of the quantity **VI** representative of the elastic stress applied to the component during the destructive test by the value of Relative Uncertainty Ui previously calculated, namely: AI = VI x Ui;
e) compare the absolute value of the difference between target values of quantities Ci based on a theoretical model that describes the elastic behaviour of the component to be subjected to testing and the value of the quantity **VI** representative of the elastic stress applied to the component during the destructive test (ABS (Ci -Vi)) with the product of the uncertainty of the destructive test AI calculated in point d) with a scale factor k; if said absolute value is less than said product, the theoretical model developed is considered certifiable and namely describing with sufficient accuracy the behaviour of the aeronautical component during the destructive test, namely: (ABS (Ci -Vi)) < k AI → certifiable theoretical model.

2. Test device according to claim 1, wherein said sensors (3) comprise a plurality of accelerometers arranged on the aeronautical component (2) and adapted to detect said quantity vi.

**Patentansprüche**

1. Testvorrichtung für eine aeronautische Komponente (2) mit einer elektronischen Steuereinheit (6) und einer Betätigungseinrichtung (5), die durch die elektronische Steuereinheit (6) gesteuert wird und so konfiguriert ist, dass sie eine Kraft auf die getestete Komponente (2) ausübt,

wobei die Testvorrichtung Sensoren (3) aufweist, die geeignet sind, an der aeronautischen Komponente (2) physikalische Größen zu messen, die sich aus der Ausübung von Kräften auf die zu testende Komponente (2) ableiten; wobei die Testvorrichtung eine Speichereinrichtung zum Speichern der gemessenen physikalischen Größen aufweist; wobei die elektronische Steuereinheit (6) so konfiguriert ist, dass sie:

a) die Betätigungseinrichtung (5) steuert (Block 100), um eine Folge von zerstörungsfreien M Tests durchzuführen, wobei M niederenergetische Stöße auf die zu testende Komponente (2) durchgeführt werden und für jeden durchgeführten Stoß der Wert einer Größe vi als Darstellung der auf die aeronautische Komponente (2) während des zerstörungsfreien Tests ausgeübten elastischen Spannung gemessen und gespeichert wird; wobei der Mittelwert Vm und die Standardabweichung σ der gemessenen M Größen vi berechnet werden; b) die relative Unsicherheit Ui als das Verhältnis zwischen dem Mittel der Standardabweichungen und dem Mittel der detektierten Größen berechnet (Block 110); c) das Betätigungsorgan (5) steuert, um einen zerstörenden Test an der zu testenden aeronautischen Komponente (2) durchzuführen (Block 120), indem sie den Wert einer Größe VI als Darstellung der auf die Komponente während des zerstörenden Tests ausgeübten elastischen Spannung misst und speichert, d) die Unsicherheit AI des zerstörenden Tests berechnet (Block 130), indem sie den Wert der Größe VI als Darstellung der auf die Komponente während des zerstörenden Tests ausgeübten elastischen Spannung mit dem Wert der zuvor berechneten relativen Unsicherheit multipliziert, d. h. AI = VI x Ui; e) den Absolutwert der Differenz zwischen Sollwerten von Größen Ci auf der Grundlage eines theoretischen Modells, das das elastische Verhalten der zu testenden Komponente beschreibt, und dem Wert der Größe VI als Darstellung der auf die Komponente während des zerstörenden Tests ausgeübten elastischen Spannung (ABS (Ci - Vi)) mit dem Produkt der im Punkt d) berechneten Unsicherheit AI des zerstörenden Tests mit einem Skalierfaktor k vergleicht; wobei bei kleinerem Absolutwert als das Produkt, das entwickelte theoretische Modell als zertifizierbar und somit das Verhalten der aeronautischen Komponente während des zerstörenden Tests ausreichend genau beschreibend gilt, d. h. (ABS (Ci - Vi)) < k AI → zertifizierbares theoretisches Modell.

2. Testvorrichtung nach Anspruch 1, wobei die Sensoren (3) mehrere Beschleunigungsmesser aufweisen, die an der aeronautischen Komponente (2) angeordnet und geeignet sind, die Größe vi zu detektieren.

**Revendications**

1. Dispositif d'essai pour un composant aéronautique (2) comprenant une unité électronique de commande (6) et un moyen d'actionnement (5) commandé par **l'unité** électronique de commande (6) et configuré pour appliquer une force sur le composant soumis à l'essai (2),

ledit dispositif d'essai comprenant des capteurs (3) adaptés pour mesurer sur le composant aéronautique (2) des grandeurs physiques issues de l'application de forces sur le composant à soumettre à l'essai (2) ; ledit dispositif d'essai comprenant un moyen de mémoire pour stocker les grandeurs physiques mesurées ;

ladite unité électronique de commande (6) étant configurée pour :

a) commander (Bloc 100) le moyen d'actionnement (5) pour effectuer une série de M essais non destructifs dans lesquels M impacts à faible énergie sont effectués sur le composant à soumettre à l'essai (2) et pour chaque impact effectué, la valeur d'une grandeur vi représentative de la contrainte élastique appliquée au composant aéronautique (2) lors de l'essai non destructif est mesurée et stockée ; la valeur moyenne Vm et l'écart-type $\sigma$ des M grandeurs vi mesurées sont calculés ;

b) calculer (Bloc 110) l'incertitude relative Ui sous la forme du rapport entre la moyenne des écarts-types et la moyenne des grandeurs détectées ;

c) commander l'actionneur (5) pour effectuer un essai destructif (bloc 120) sur le composant aéronautique à soumettre à l'essai (2) en mesurant et en stockant la valeur d'une grandeur VI représentative de la contrainte élastique appliquée au composant lors de l'essai destructif,

d) calculer (bloc 130) l'incertitude de l'essai destructif AI en multipliant la valeur de la grandeur VI représentative de la contrainte élastique appliquée au composant lors de l'essai destructif par la valeur de l'Incertitude Relative Ui précédemment calculée, c'est-à-dire : AI = VI x Ui ;

e) comparer la valeur absolue de la différence entre des valeurs cibles de grandeurs Ci basées sur un modèle théorique qui décrit le comportement élastique du composant à soumettre à l'essai et la valeur de la grandeur VI représentative de la contrainte élastique appliquée au composant lors de l'essai destructif (ABS (Ci - Vi)) avec le produit de l'incertitude de l'essai destructif AI calculée au point d) avec un facteur d'échelle k ; si ladite valeur absolue est inférieure audit produit, le modèle théorique développé est considéré comme certifiable et décrivant notamment avec une précision suffisante le comportement du composant aéronautique lors de l'essai destructif, c'est-à-dire : (ABS (Ci - Vi)) < k AI $\rightarrow$ modèle théorique certifiable.

2. Dispositif d'essai selon la revendication 1, dans lequel lesdits capteurs (3) comprennent une pluralité d'accéléromètres agencés sur le composant aéronautique (2) et adaptés pour détecter ladite grandeur vi.

FIG. 1

REALIZE M
LOW-ENERGY
IMPACTS
MEASUREMENT $v_i$ —100

CALCULATION
OF RELATIVE
UNCERTAINTY $U_i$ —110

PERFORM
DESTRUCTIVE
TEST MEASURE
VI —120

CALCULATION OF
DESTRUCTIVE TEST
UNCERTAINTY
$AI = VI * U_i$ —130

COMPARE
$ABS(C_i - VI)$
AND
$kAI$ —140

150
CERTIFIABLE
MODEL ← YES — $ABS(C_i - v_i) < kAI$ — NO → NON-CERTIFIABLE
MODEL
160

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102021000029351
- US 2013298690 A